# EUROPÄISCHE PATENTSCHRIFT

(11) **EP 2 000 826 B1**
(45) Veröffentlichungstag und Bekanntmachung des Hinweises auf die Patenterteilung: **28.10.2009**
(21) Anmeldenummer: 08009866.8
(22) Anmeldetag: 30.05.2008
(51) Int. Cl.: G01S 13/93

(54) **Verfahren zur Erfassung einer Vereisung eines der Erfassung von Objekten dienenden Radarsensors eines in einem Kraftfahrzeug vorgesehenen Fahrerassistenzsystems**
Method for recording ice on one of the radar sensors used to record objects in a driver assistance system in a motor vehicle
Procédé de détection de givre d'un capteur radar servant à la détection d'objets d'un système d'assistance du conducteur prévu dans un véhicule automobile

(30) Priorität: 04.06.2007 DE 102007026033
(43) Veröffentlichungstag der Anmeldung: 10.12.2008
(73) Patentinhaber: AUDI AG, 85045 Ingolstadt (DE)
(72) Erfinder: Holzmann, Manfred, 91171 Greding (DE); Barth, Alexander, 91180 Heideck (DE)
(74) Vertreter: Thielmann, Frank

(56) Entgegenhaltungen:
- DE-A1- 19 531 632
- US-A1- 2002 047 780
- US-A1- 2006 227 037

## Beschreibung

Die Erfindung betrifft ein Verfahren zur Erfassung einer Vereisung eines der Erfassung von Objekten dienenden Radarsensors eines in einem Kraftfahrzeug vorgesehenen Fahrerassistenzsystems, wobei eine den Betrieb des Radarsensors steuernde Steuerungseinrichtung die vom Radarsensor gegebenen Messsignale, die das Vorhandensein eines Objekts anzeigen, auswertet und anhand eines Messsignals Objektdaten umfassend einen Abstand des Objekts und/oder die Relativgeschwindigkeit des Objekts zum Radarsensor und/oder die seitliche Ablage des Objekts zu einer im Signalfächer des Radarsensors liegenden ausgezeichneten Achse ermittelt.

Verschiedene fahrzeugseitig integrierte Fahrerassistenzsysteme, beispielsweise ein Abstandshaltesystem (ACC-System, ACC = adaptiv cruise control) umfassen zumeist fahrzeugfrontseitig vorgesehene Radarsensoren, über die der Abstand des eigenen Fahrzeugs zu einem vorausfahrenden Fahrzeug erfasst werden kann, was durch Analyse der von den Radarsensoren gegebenen Messsignale durch eine zugeordnete Steuerungseinrichtung erfolgt. Aus den Messsignalen kann weiterhin auch die Relativgeschwindigkeit des eigenen Fahrzeugs zum vorausfahrenden Fahrzeug oder die seitliche Ablage des vorausfahrenden Fahrzeugs zum eigenen Fahrzeug ermittelt werden. Die "freie Sicht" der Radarsensoren ist für eine ordnungsgemäße Funktion des Fahrerassistenzsystems entscheidend. Schwierigkeiten können insbesondere im Winter auftreten, wenn sich Schnee oder Schneematsch oder Eis auf dem Radarsensor bzw. der zugeordneten Abdeckung oder Optik ablagern. Um dem zu begegnen, ist es bekannt, Heizeinrichtungen vorzusehen, die ein Ablagern von Schnee oder Schneematsch oder eine Eisbildung verhindern. Jedoch besteht bei ungünstigen Witterungsverhältnissen, z. B. sehr trockener Kälte, und längeren Fahrten die Gefahr, dass der Radarsensor bzw. dessen Optik bzw. die Abdeckung trotz Beheizung vereist. Dabei bildet sich vom Rand her eine Schicht aus blankem Eis, die immer mehr zur Mitte hin zuwächst. Problematisch dabei ist, dass insbesondere Eis in gewissem Maße transparent für Radarstrahlung ist bzw. selbst gesendete Radarstrahlung zurückreflektiert, weshalb herkömmliche Messsignalauswertungen zur Erkennung einer möglichen "Blindheit" eines Radarsensors, also einer Signaldegradation nicht wirksam sind. Derartige Auswertealgorithmen, die einen "Blindheitsindikator" errechnen, berücksichtigen dabei die empfangene Leistung oder die Zahl empfangener Objekte etc. Aufgrund der Reflexionseigenschaften des Eises stellen sich häufig Situationen ein, bei denen diese bekannten Auswertealgorithmen zur Blindheitserfassung einen Blindheitsindikator ermitteln, der deutlich höher als die Abschaltschwelle ist. Denn es wird eine ausreichende rückgestrahlte Energiemenge aufgrund der Eisreflexion ermittelt, wie auch häufig eine Vielzahl von Objekten aufgrund der Eisreflexion erfasst werden können, etc. Eine zuverlässige Objekterkennung ist nicht mehr möglich, da durch die Signalreflexion des Eises fehlerhafte Informationen in die Signalauswertung eingehen bzw Winkelinformationen stark verfälscht werden. Das System müsste eigentlich, da es nicht mehr korrekt arbeitet, abgeschaltet werden, die Abschalterkennung ist jedoch nicht zwingend möglich.

Aus der US 2006/0227037 A1 ist eine Objekterkennungseinrichtung in Form eines Radarsensors für ein Kraftfahrzeug bekannt. Zur Unterscheidung eines funktionsfähigen Zustands von einem davon abweichenden Zustand werden die Signalintensitäten FM-CW-modulierter Signale und CW-modulierter Signale miteinander verglichen.

Der Erfindung liegt damit das Problem zugrunde, ein demgegenüber verbessertes Verfahren zur Vereisungserfassung anzugeben, das auch in solchen Fällen eine sichere Erkennung einer Fehlfunktion zulässt.

Zur Lösung dieses Problems ist bei einem Verfahren der eingangs genannten Art erfindungsgemäß vorgesehen, dass innerhalb eines vorbestimmten Zeitintervalls die Messsignale erfasst werden, zu denen Objektdaten ermittelt werden, deren Abstand ≤ 3m, insbesondere ≤ 2m zum Radarsensor ist, wobei die Anzahl gezählter Messsignale mit einem Schwellwert verglichen wird und ein Erreichen oder Überschreiten des Schwellwerts im Rahmen der Vereisungserfassung berücksichtigt wird.

Beim erfindungsgemäßen Verfahren ist der zentrale, im Rahmen der Vereisungserfassung ausgewählte Parameter der Abstand eines Objekts zum eigenen Kraftfahrzeug, der aus den gegebenen Messsignalen eines Radarsensors ermittelt wird. Werden Messsignale aufgrund einer Eisreflexion erzeugt, so zeigen die Messsignale "Pseudoobjekte" an bzw. werden zu den Messsignalen entsprechende Pseudoobjektabstände ermittelt, die extrem nah zum eigenen Kraftfahrzeug sind. Dies resultiert daraus, dass die Eisschicht unmittelbar auf dem Radarsensor aufgewachsen ist. Im erfindungsgemäßen Verfahren werden nun zu allen aufgenommenen Messsignalen die entsprechenden Abstandsobjektdaten ermittelt. Die Messsignale, zu denen sehr geringe Abstände ermittelt werden, also Abstände, die erfindungsgemäß ≤ 3m, vorzugsweise ≤ 2m zu eigenen Fahrzeug sind, werden innerhalb des Zeitintervalls gezählt und kontinuierlich bereits während der Zählung oder nach Ablauf des Zeitintervalls mit einem Vergleichs-Schwellwert verglichen. Ist die gezählte Anzahl größer als der Schwellwert, so wird die Steuerungseinrichtung diese Information oder diesen Umstand im Rahmen der Vereisungserfassung berücksichtigen, wobei eine Vereisung bereits dann erkannt werden kann, wenn ausschließlich der Schwellwert überschritten wird, oder wenn, worauf nachfolgend noch eingegangen wird, zusätzliche weitere Randbedingungen erfüllt sind. Ist der Schwellwert nicht überschritten, ist also eine sehr geringe Anzahl an "Pseudoobjekten" in unmittelbarer, extremer Nähe zum Fahrzeug erfasst worden, ist nicht von einer Vereisung auszugehen.

Grundlegender Überwachungsparameter für eine mögliche Vereisung ist also der Abstand etwaiger reflexionsbedingt angenommener "Pseudoobjekte", die sich in einem eigentlich nicht möglichen Abstand vor dem Kraftfahrzeug befinden. Die ermittelte Anzahl dieser Messsignale geht erfindungsgemäß, so sie einen Schwellwert überschreitet, in die Vereisungserfassungsprüfung ein. Es erfolgt hier also quasi eine Plausibilitätsprüfung der Messsignale dahingehend, ob ein ermittelter Zustand, nämlich das Vorhandensein einer Vielzahl von Objekten unmittelbar vor dem eigenen Fahrzeug, überhaupt möglich ist, wobei erfindungsgemäß davon ausgegangen wird, dass ein Fehlerfall vorliegt, wenn eben eine hinreichende Anzahl solcher "Pseudoobjekte" erkannt wird, da dies bei normalen Fahrsituationen eben nicht der Fall ist.

In besonders zweckmäßiger Weiterbildung werden nur Messsignale erfasst und gezählt, zu denen zusätzlich Objektdaten ermittelt werden, deren Relativgeschwindigkeit im Bereich zwischen -3m/s bis +3m/s, insbesondere zwischen -2m/s bis +2m/s liegt, und/oder deren seitliche Ablage zu einer ausgezeichneten Messachse des Radarsensors im Bereich zwischen -1,5m bis +1,5m, insbesondere zwischen -1m bis +1m liegt, wobei eine Vereisung erfasst wird, wenn der Schwellwert erreicht oder überschritten wird. Gemäß dieser Erfindungsausgestaltung wird ein oder werden zwei weitere Parameter im Rahmen einer Vereisungserfassung zusätzlich zu den Abstandsobjektdaten berücksichtigt.

Anhand fehlerhafter Messsignale, also von der Eisschicht reflektierter Messsignale, können ferner extrem niedrige Relativgeschwindigkeiten zwischen dem aus dem Messsignal ermittelten "Pseudoobjekt" und dem eigenen Kraftfahrzeug bestimmt werden. Denn die Eisschicht ist lagefest, ändert also ihre Position nicht. Infolgedessen werden solchen "Pseudoobjekten" häufig Relativgeschwindigkeiten von 0m/s zugeordnet, das heißt, die Signalauswertung ergibt zwangsläufig, dass sich solche "Pseudoobjekte" mit dem Fahrzeug mitbewegen. Erfindungsgemäß können nun nur solche Messsignale erfasst und gezählt werden, bei denen zum einen ein extrem niedriger Abstand im erfindungsgemäßen Intervall ermittelt wird, und bei denen zum anderen eine extrem niedrige Relativgeschwindigkeit ermittelt wird. Alternativ zur Berücksichtigung der Relativgeschwindigkeit besteht auch die Möglichkeit, die seitliche Ablage eines "Pseudoobjekts" zu ermitteln. Auch über die seitliche Ablage kann eine weitere Plausibilisierung fehlerhafter Messsignale erfolgen, die dann tatsächlich zu erfassen und zählen sind. Zweckmäßigerweise können auch beide zusätzlichen Parameter berücksichtigt werden, so dass insgesamt nur Messsignale gezählt werden, bei denen sowohl der Abstand als auch die Relativgeschwindigkeit als auch die seitliche Ablage innerhalb der geforderten Intervalle liegen.

Das Zeitintervall sollte ≤ 20s, insbesondere ≤10s lang sein, vorzugsweise sollte es ca. 4s betragen. Je kürzer das Zeitintervall ist, mithin also die Erfassungs- und Auswertezeit, desto schneller kann auf einen Fehlerzustand geschlossen werden und im Bedarfsfall das Fahrerassistenzsystem abgeschaltet oder als inaktiv gekennzeichnet werden.

Der Vergleichs-Schwellwert, mit dem die gezählte Signalanzahl verglichen wird, kann zwischen 2 und 100 betragen. Bei einem kurzen Zeitintervall von beispielsweise 4s ist ein Schwellwert von beispielsweise 8 zweckmäßig, das heißt, es müssen mindestens acht "Pseudoobjekte" erfasst werden, um den Schwellwert zu erreichen, bzw. mindestens 9 "Pseudoobjekte" für ein Überschreiten und zu einer Vereisungserkennung zu führen.

Zweckmäßigerweise wird die Vereisungserkennung nur dann durchgeführt, wenn die Ist-Geschwindigkeit des Fahrzeugs größer einer Schwellgeschwindigkeit ist. Ist der Radarsensor beispielsweise Teil eines Abstandhaltesystems (ACC-Systems), so macht eine Vereisungsüberprüfung nur dann Sinn, wenn das ACC-System grundsätzlich aktiv ist, was nur dann der Fall ist, wenn das Fahrzeug eine bestimmte Mindestgeschwindigkeit fährt. Diese Schwellgeschwindigkeit kann beispielsweise 10 km/h, vorzugsweise wenigstens 20 km/h betragen. Ist das Fahrzeug langsamer, ist die Vereisungserkennung nicht aktiv, zumal insbesondere bei Geschwindigkeiten ≤ 10 km/h durchaus auch reale Objekte in einem Abstand von weniger als 3m zum eigenen Fahrzeug sein können.

In vorteilhafter Weiterbildung der Erfindung kann ferner die Vereisungserkennung auch nur dann durchgeführt werden, wenn die Umgebungstemperatur kleiner als eine Schwelltemperatur ist. Eine Vereisung kann zwangsläufig nur bei relativ niedrigen Temperaturen gegeben sein, so dass eine Vereisungserfassung auch nur dann Sinn macht, wenn es hinreichend kalt ist. Eine Schwelltemperatur kann beispielsweise +7 °C oder weniger betragen. Bereits bei Temperaturen im Plus-Gradbereich kann es insbesondere durch den Fahrtwind zu leichten Vereisungen kommen, weshalb eine Vereisungserfassung dann bereits grundsätzlich sinnvoll sein kann.

Weiterhin kann die Vereisungserfassung auch nur dann durchgeführt werden, wenn eine Scheibenwischeinrichtung inaktiv ist. Wird der Scheibenwischer betätigt, so liegt in der Regel Feuchtigkeit auf der Scheibe, sei es Regen oder Nebelniederschlag. In der Regel kann es dann ebenfalls nicht zu einem Vereisen kommen, da sich ansonsten auf der Windschutzscheibe eine Eisschicht bilden würde und die Betätigung des Scheibenwischers sinnvoll ist. Gegebenenfalls kann zur Entscheidung, ob die Vereisungserkennung aktiviert wird oder nicht, auch berücksichtigt werden, wie lange die Scheibenwischeinrichtung aktiviert wird.

Wird eine Vereisung erkannt, kann entweder das Fahrerassistenzsystem automatisch über die Steuerungseinrichtung deaktiviert werden, und/oder dem Fahrer eine Warninformation gegeben werden, dass das Fahrerassistenzsystem möglicherweise nicht mehr richtig arbeitet, da eine Vereisung gegeben ist. Die Warninformation kann auch angeben, dass das Fahrerassistenzsystem automatisch deaktiviert wurde.

Eine gegebene Vereisung kann nur ein temporärer Zustand sein. Das heißt, dass das Eis nach kurzer Zeit auch wieder abschmelzen kann, mithin also das vormals fehlerhaft arbeitende Fahrerassistenzsystem wieder fehlerfrei funktionieren kann. Gleichwohl wurde es aber zuvor deaktiviert. Um es nun im Bedarfsfall wieder aktivieren zu können, werden erfindungsgemäß nach einer Vereisungserkennung kontinuierlich weiterhin Messsignale erfasst, wobei, wenn innerhalb eines zweiten Zeitintervalls eine Anzahl an Messsignalen ermittelt wird, zu denen entsprechende Objektdaten ermittelt werden, die gleich oder kleiner als ein zweiter Schwellwert ist, die Deaktivierung des Fahrerassistenzsystem aufgehoben und/oder eine neue Information an den Fahrer ausgegeben wird. Es erfolgt also kontinuierlich eine weitere Messsignalauswertung hinsichtlich der Parameter "Abstand" und gegebenenfalls "Relativgeschwindigkeit" und/oder "seitliche Ablage", wie auch entsprechende Messsignale, die die eingangs genannten Grenzwerte unterschreiten, gezählt werden. Die Anzahl wird wiederum mit einem zweiten Schwellwert verglichen, wobei in Abhängigkeit des Vergleichsergebnisses es entweder bei der gegebenen Deaktivierung des Fahrerassistenzsystems oder dergleichen bleibt, das heißt, der Vereisungszustand ist nach wie vor gegeben. Entspricht oder unterschreitet die gezählte Signalanzahl jedoch den zweiten Schwellwert, so ist von einer Enteisung auszugehen, da eben innerhalb des Überwachungszeitintervalls keine hinreichende Anzahl an "Pseudoobjekten" detektiert wurde, so dass das Fahrerassistenzsystem wieder aktiviert werden kann. Dieses zweite Zeitintervall sollte wenigstens 60s, beispielsweise 120s betragen, so dass ein hinreichend langer Überwachungszeitraum zur Verfügung steht, um Sicherheit dahingehend zu haben, dass eine erkannte Enteisung auch tatsächlich eingetreten sein kann. Der Schwellwert kann auch hier beliebig gewählt werden, er sollte jedoch möglichst niedrig sein, beispielsweise 5 oder 10 Ereignisse, um ausreichend Sicherheit zu haben.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipdarstellung eines erfindungsgemäßen Kraftfahr- zeugs, geeignet zur Durchführung des erfindungsgemäßen Ver- fahrens,
- Fig. 2: eine Darstellung eines Radarbilds bzw. des Verlaufs einzelner Messsignale bzw. darauf abgeleiteter Objekte über die Zeit oh- ne Sensorvereisung,
- Fig. 3: eine Darstellung entsprechend Fig. 2 mit Sensorvereisung, und
- Fig. 4: ein Ablaufdiagramm zur Darstellung des erfindungsgemäßen Verfahrens.

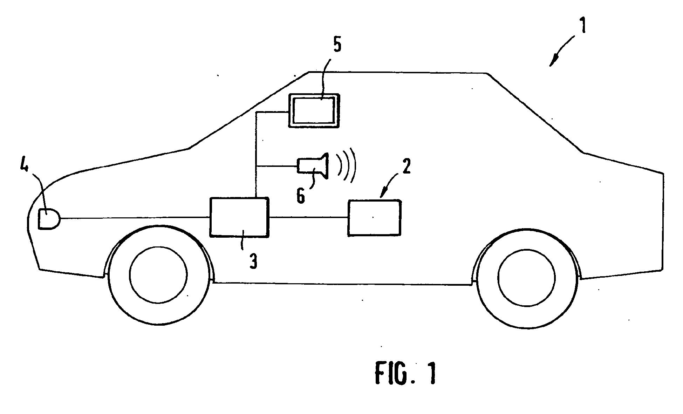

Fig. 1 zeigt in Form einer Prinzipdarstellung ein erfindungsgemäßes Kraftfahrzeug 1, umfassend ein Fahrerassistenzsystem 2, beispielsweise ein Abstandshaltesystem, mit einem zugeordneten Steuergerät 3 sowie mehreren fahrzeugfrontseitig angeordneten Radarsensoren 4, von denen in Fig. 1 nur einer gezeigt ist. Die Radarsensoren 4, die über die Steuerungseinrichtung 3 angesteuert werden, senden Signale aus und empfangen Reflexionssignale, die Steuerungseinrichtung 3 ermittelt daraus das Vorhandensein etwaiger Objekt im Fahrzeugvorfeld, und steuert die Komponenten des Fahrerassistenzsystem 2 entsprechend der systemimmanenten Funktion. Die Steuerungseinrichtung 3 ist zur Erfassung einer möglichen Vereisung eines Radarsensors 4 ausgebildet, worauf nachfolgend noch eingegangen wird. Wird eine Vereisung erfasst, so kann das Fahrerassistenzsystem 2 über die Steuerungseinrichtung 3 deaktiviert werden, dem Fahrer kann über ein optisches Anzeigemittel 5 wie beispielsweise einen kleinen Bildschirm oder ein akustisches Anzeigemittel 6 wie das integrierte Lautsprechersystem eine optische oder akustische Information gegeben werden, dass das Fahrerassistenzsystem entweder automatisch deaktiviert wurde, oder eine Vereisung gegeben ist und das Fahrerassistenzsystem gegebenenfalls nicht zuverlässig arbeitet. Darüber hinaus ist die Steuerungseinrichtung 3 auch imstande, eine Zustandsänderung zu erfassen, dahingehend, dass die Vereisung nicht mehr gegeben ist, und anschließend das Fahrerassistenzsystem 2 wieder zu aktivieren und über die Anzeigemittel 5, 6 entsprechende Informationen auszugeben.

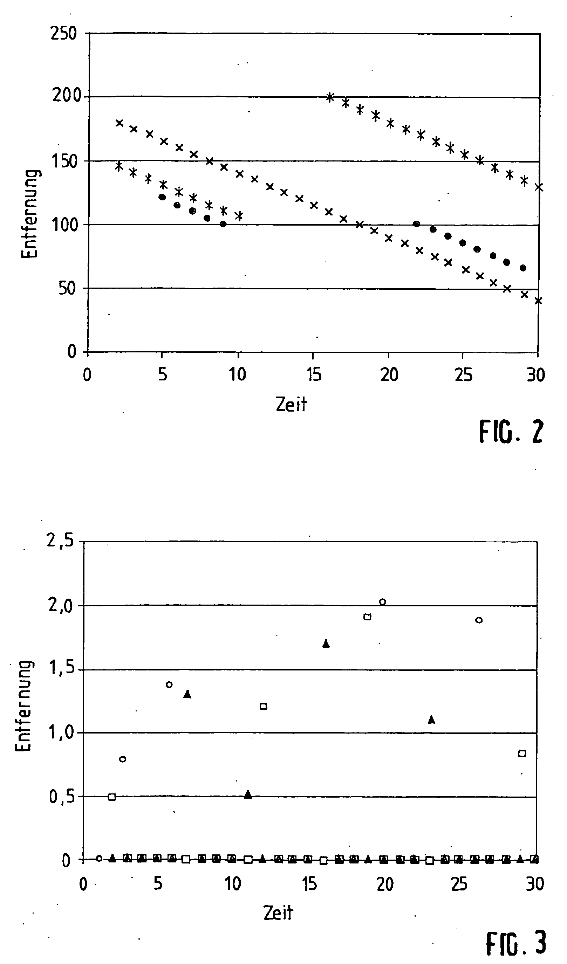

Fig. 2 zeigt in Form einer Prinzipdarstellung ein Radarbild bzw. den Verlauf einzelner Messsignale, wie sie sich bei voller Funktionsfähigkeit des Fahrerassistenzsystems 2, also ohne Radarsensorvereisung ergeben. Aufgetragen ist längs der Ordinate die Entfernung eines erfassten Objekt vom eigenen Kraftfahrzeug, längs der Abszisse die Zeit. Jedes Objekt reflektiert wie beschrieben das ausgesendete Radarsignal, die Radarsensoren empfangen das reflektierte Radarsignal, die Steuerungseinrichtung 3 ermittelt aus dem Messsignal als Objektdatum die Entfernung des Objekts vom eigenen Fahrzeug. In Fig. 2 ist die Entfernung über die Zeit aufgetragen, so dass der sich über die Zeit ändernde Abstand des eigenen Fahrzeugs zum vorausfahrenden Objekt bzw. hier den vorausfahrenden Objekten deutlich erkennbar ist. Über die Zeit nehmen die Entfernungswerte der einzelnen Messsignale, die den jeweils selben Objekten zugeordnet werden können und durch entsprechende Symbole voneinander unterschieden sind, ab, das heißt, das eigene Fahrzeug nähert sich kontinuierlich vorausfahrenden Fahrzeugen. Es ist eine exakte Auflösung möglich, die einzelnen Messsignale können sehr exakt verfolgt und spezifischen Objekten zugeordnet werden.

Anders im Falle einer Vereisung des Radarsensors, wie in Fig. 3 gezeigt ist. Dort sind in völlig unregelmäßiger Verteilung einzelne Messsignale bzw. die aus ihnen ermittelten Entfernungswerte aufgetragen. Während in Fig. 2 die Abstände noch beachtlich groß waren, liegen in Fig. 3 die Abstände extrem nah zum eigenen Fahrzeug, sie liegen im Beispiel unterhalb von 2m, viele Messsignale weisen auch den Abstand 0 m auf. Dies ergibt sich daraus, dass die aufgewachsene Eisschicht zwar für Radarstrahlen teilweise transparent ist, jedoch diese auch reflektiert. Das heißt, ein ausgesendetes Radarsignal kann teilweise oder vollständig von der überdeckenden Eisschicht sofort wieder zurückreflektiert werden. Hieraus ermittelt die Steuerungseinrichtung zwangsläufig einen minimalen Abstand, weshalb es zu einer derartigen Signal- oder Abstandsverteilung wie in Fig. 3 gezeigt kommt.

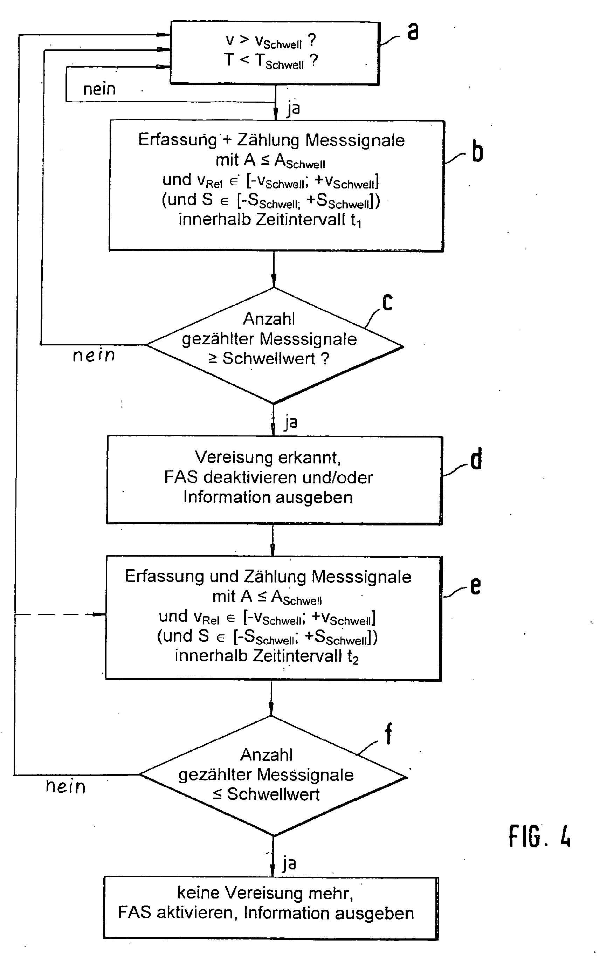

Hier setzt nun das erfindungsgemäße Verfahren an, indem zur Erkennung einer möglichen Vereisung genau solche fehlerhaften Messsignale berücksichtigt werden. Ein Ablaufdiagramm ist in Fig. 4 gezeigt.

Im Schritt a wird zunächst überprüft, ob die grundlegenden Voraussetzungen für eine Sinnhaftigkeit einer Vereisungserkennung überhaupt gegeben sind. Dies ist zum einen, ob das Fahrzeug eine gewisse Mindestgeschwindigkeit fährt, hier durch V_{Schwell} angegeben. Sie beträgt beispielsweise 20 km/h. Ein weiteres zu prüfendes Kriterium ist, ob die Umgebungstemperatur T kleiner einer bestimmten Schwelltemperatur T_{Schwell} ist, die beispielsweise +7 oder +4° beträgt. Denn erst wenn diese Voraussetzungen gegeben sind, ist zum einen sichergestellt, dass das Fahrerassistenzsystem 2 grundsätzlich im Betrieb ist, zum anderen, dass es überhaupt zu einer Vereisung kommen kann.

Sind beide Voraussetzungen erfüllt, so wird im Schritt b, wenn das Fahrerassistenzsystem aktiv ist und Messsignale aufgenommen werden, damit begonnen, die Messsignale zu erfassen, anhand denen spezifische Objektdaten ermittelt werden können. Dies ist zum einen der Abstand A, der, damit ein solches Messsignal erfasst und gezählt werden kann, kleiner als ein Schwellabstand A_{Schwell} ist, der beispielsweise 2m oder 1,8m beträgt. Zusätzlich wird bevorzugt als weiteres Objektdatum die Relativgeschwindigkeit v_{Rel} eines aus dem Messsignal abgeleiteten Objekts zum eigenen Kraftfahrzeug übermittelt und überprüft, ob diese Relativgeschwindigkeit V_{Rel} innerhalb eines vorgegebenen Relativgeschwindigkeitsintervalls [-v_{Schwell}; +v_{Schwell}] liegt, wobei -v_{Schwell} bevorzugt -2m/s und +v_{Schwell} vorzugsweise +2m/s beträgt. Denn die zu erfassenden "Pseudoobjekte", die aus vereisungsbedingt reflektierten Messsignalen resultieren, bewegen sich letztlich üblicherweise mit dem Fahrzeug mit, da die Eisschicht sich ja selbst mit dem Fahrzeug mitbewegt. Gegebenenfalls kann auch zusätzlich die seitliche Ablage S ermittelt werden, die ein solches "Pseudoobjekt", das aus einem Messsignal abgeleitet wird, zu einer ausgezeichneten Sensormessachse aufweist, wobei auch hier überprüft, ob die seitliche Ablage innerhalb eines bestimmten Ablageintervalls [-S_{Schwell}; +S_{Schwell}] liegt, wobei -S_{Schwell} bevorzugt -1 mund +S_{Schwell} +1 m ist.

Gezählt werden im vorliegenden Beispiel nur solche Messsignale, bei denen der Abstand A ≤ A_{Schwell} und die Relativgeschwindigkeit v_{Rel} innerhalb des Geschwindigkeitsintervalls [-v_{Schwell}; +v_{Schwell}] ist. Diese Zählung erfolgt innerhalb eines vorbestimmten Zeitintervalls t₁, das beispielsweise 4s beträgt. Das Messintervall beginnt zu einem bestimmten Zeitpunkt, beispielsweise dann, wenn erstmals ein Pseudoobjekt-Messsignal vorliegt.

Im Schritt c wird nun überprüft, ob die gezählte Anzahl einem vorgegebenen Schwellwert entspricht oder größer als dieser ist. Bei einem Zeitintervall t₁ von beispielsweise 4s kann dieser Vergleichs-Schwellwert beispielsweise 8 solcher Ereignisse bzw. Messsignale betragen. Ist dies der Fall, werden also hinreichend viele "Pseudoobjekte", also Objekte, die definitiv nicht vor dem Fahrzeug sind, erfasst, so ist, wie in Schritt d angegeben, von einer Vereisung eines Radarsensors auszugehen, die Vereisung wird also erkannt. Das Fahrerassistenzsystem, in Fig. 4 mit FAS abgekürzt, wird über die Steuerungseinrichtung 3 automatisch deaktiviert, ferner kann alternativ oder zusätzlich auch eine Information über eine der Anzeigemittel 5, 6 an den Fahrer ausgegeben werden.

Für den Fall, dass die gezählte Anzahl kleiner als der Schwellwert ist, kehrt das Verfahren wieder zum Schritt a zurück und überprüft erneut, ob die Voraussetzungen für eine Vereisungsprüfung gegeben sind, und beginnt gegebenenfalls erneut mit der Zählung.

Wird eine Vereisung erkannt, so erfolgt zur kontinuierlichen Überwachung einer möglichen Zustandsänderung dahingehend, dass das Fahrerassistenzsystem erneut zugeschaltet werden kann und die Vereisung nicht mehr gegeben ist, gemäß Schritt e eine erneute Erfassung und Zählung von Messsignalen, die die eingangs beschriebenen Voraussetzungen erfüllen, bei denen also der abgeleitete Abstand A≤ A_{Schwell} ist und die Relativgeschwindigkeit v_{Rel} innerhalb des Intervalls [-v_{Schwell} +v_{Schwell}] liegt, wobei auch hier gegebenenfalls, jedoch nicht zwingend, die seitliche Ablage berücksichtigt werden kann. Diese Zählung erfolgt innerhalb eines weiteren Zeitintervalls t₂, das deutlich länger als das erste Zeitintervall t₁ sein kann, beispielsweise 60 - 120s. Denn über dieses Zeitintervall und diese erneute Erfassung soll sichergestellt werden, dass eine erneute Aktivierung des Fahrerassistenzsystems nur dann erfolgt, wenn tatsächlich definitiv von einer nicht mehr gegebenen Vereisung und damit einer Funktionsfähigkeit des Fahrerassistenzsystems ausgegangen werden kann.

Im Schritt f erfolgt nun nach Ablauf des Zeitintervalls t₂, das beispielsweise unmittelbar nach Ablauf des Zeitintervalls t₁ erstmals angestoßen werden kann, ein erneuter Vergleich der gezählten Messsignalanzahl mit einem zweiten Schwellwert, dahingehend, ob die gezählte Anzahl ≤ dem Schwellwert ist, welcher Schwellwert auch Null sein kann. Ist dies der Fall, werden also hinreichend wenige fehlerhafte Messsignale erfasst, ist davon auszugehen, dass keine Vereisung mehr gegeben ist. Die Steuerungseinrichtung 3 aktiviert selbsttätig das Fahrerassistenzsystem 2 erneut, ferner wird eine entsprechende Information an den Fahrer über eines der Anzeigemittel 5, 6 ausgegeben, dass das Fahrerassistenzsystem wieder zur Verfügung steht. Ergibt sich jedoch, dass die Anzahl zahlenmäßig größer als der Schwellwert ist, so kehrt das Verfahren wieder zum Schritt a zurück, das gesamte Prozedere beginnt von vorne. Alternativ ist es auch, wie durch den gestrichelten Pfeil dargestellt, denkbar, dass die Verfahrensschleife nur zum Schritt e zurückkehrt und erneut mit der Erfassung und Zählung von Messsignalen für einen Vergleich mit dem zweiten Schwellwert beginnt.

## Patentansprüche

1. Verfahren zur Erfassung einer Vereisung eines der Erfassung von Objekten dienenden Radarsensors eines in einem Kraftfahrzeug (1) vorgesehenen Fahrerassistenzsystems (2), wobei eine den Betrieb des Radarsensors (4) steuernde Steuerungseinrichtung (3) die vom Radarsensor (4) gegebenen Messsignale, die das Vorhandensein eines Objekts anzeigen, auswertet und anhand eines Messsignals Objektdaten umfassend einen Abstand des Objekts und/oder die Relativgeschwindigkeit des Objekts zum Radarsensor und/oder die seitliche Ablage des Objekts zu einer im Signalfächer des Radarsensors (4) liegenden ausgezeichneten Achse ermittelt,
**dadurch gekennzeichnet,**
**dass** innerhalb eines vorbestimmten Zeitintervalls (t₁) die Messsignale erfasst werden, zu denen Objektdaten ermittelt werden, deren Abstand (A) ≤ 3m, insbesondere ≤ 2m zum Radarsensor (4) ist, wobei die Anzahl genzählter Messsignale mit einem Schwellwert (S) verglichen wird und ein Erreichen oder Überschreiten des Schwellwerts im Rahmen der Vereisungserfassung berücksichtigt wird.

2. Verfahren nach Anspruch 1,
**dadurch gekennzeichnet,**
**dass** nur Messsignale erfasst und gezählt werden, zu denen zusätzlich Objektdaten ermittelt werden, deren Relativgeschwindigkeit im Bereich zwischen -3m/s bis +3m/s, insbesondere zwischen -2m/s bis +2m/s liegt, und/oder deren seitliche Ablage zu einer ausgezeichneten Messachse des Radarsensors (4) im Bereich zwischen -1,5m bis +1,5m, insbesondere zwischen -1m bis +1m liegt, wobei eine Vereisung erfasst wird, wenn der Schwellwert erreicht oder überschritten wird.

3. Verfahren nach Anspruch 1 oder2,
**dadurch gekennzeichnet,**
**dass** das Zeitintervall ≤ 20s, insbesondere ≤ 10 s, vorzugsweise 4s beträgt.

4. Verfahren nach einem der vorangehenden Ansprüche,
**dadurch gekennzeichnet,**
**dass** der Schwellwert der Anzahl gezählter Masssignale zwischen 2 und 100 beträgt.

5. Verfahren nach einem der vorangehenden Ansprüche,
**dadurch gekennzeichnet,**
**dass** die Vereisungserkennung nur dann durchgeführt wird, wenn die Ist-Geschwindigkeit des Fahrzeugs (1) größer als einer Schwellgeschwindigkeit ist.

6. Verfahren nach Anspruch 5,
**dadurch gekennzeichnet,**
**dass** die Schwellgeschwindigkeit wenigstens 10km/h, vorzugsweise 20 km/h beträgt.

7. Verfahren nach einem der vorangehenden Ansprüche,
**dadurch gekennzeichnet,**
**dass** die Vereisungserkennung nur dann durchgeführt wird, wenn die Umgebungstemperatur kleiner als eine Schwelltemperatur ist.

8. Verfahren nach Anspruch 7,
**dadurch gekennzeichnet,**
**dass** die Schwelltemperatur +7°C oder weniger beträgt.

9. Verfahren nach einem der vorangehenden Ansprüche,
**dadurch gekennzeichnet,**
**dass** die Vereisungserkennung dann durchgeführt wird, wenn eine Scheibenwischeinrichtung inaktiv ist.

10. Verfahren nach einem der vorangehenden Ansprüche,
**dadurch gekennzeichnet,**
**dass** bei Erkennen einer Vereisung das Fahrerassistenzsystem deaktiviert und/oder dem Fahrer eine Warninformation gegeben wird.

11. Verfahren nach Anspruch 10,
**dadurch gekennzeichnet,**
**dass** nach einer Erkennung einer Vereisung kontinuierlich weiterhin Messsignale erfasst werden, wobei, wenn innerhalb eines zweiten Zeitintervalls eine Anzahl an Messsignalen ermittelt wird, zu denen entsprechende Objektdaten ermittelt werden, die kleiner als ein zweiter Schwellwert ist, die Deaktivierung des Fahrerassistenzsystems (2) aufgehoben und/oder eine neue Information an den Fahrer ausgegeben wird.

12. Verfahren nach Anspruch 11,
**dadurch gekennzeichnet,**
**dass** das zweite Zeitintervall wenigsten 60s, vorzugsweise 120s beträgt.

## Claims

1. Method for detecting icing on a radar sensor used for the detection of objects in a driver assistance system (2) provided in a motor vehicle (1) wherein a control device (3) controlling the operation of the radar sensor (4) analyses the measurement signals supplied by the radar sensor (4) which indicate the presence of an object and from a measurement signal determines object data including a distance of the object and/or the velocity of the object relative to the radar sensor and/or the lateral deviation of the object from a singular axis lying within the sweep of the radar sensor (4),
**characterized in that**
those measurement signals acquired within a predetermined time interval (t1) which yield object data with a distance (A) from the radar sensor (4) of 3 m or less, and in particular 2 m or less, [are counted], the number of such counted measurement signals is compared with a threshold value (S), and the reaching or exceeding of the threshold value is taken into account in the icing analysis.

2. Method according to Claim 1,
**characterized in that**
only those measurement signals are acquired and counted which moreover yield object data whose relative velocity lies within the range between -3 m/s and +3 m/s, and in particular between -2 m/s and +2 m/s, and/or whose lateral deviation from a singular measurement axis of the radar sensor (4) lies within the range between -1.5 m and +1.5 m, and in particular between -1 m and +1 m, icing being detected if the threshold value is reached or exceeded.

3. Method according to Claim 1 or Claim 2,
**characterized in that**
the time interval is 20 s or less, in particular 10 s or less, and preferably 4 s.

4. Method according to any one of the preceding claims,
**characterized in that**
the threshold value for the number of counted measurement signals is between 2 and 100.

5. Method according to any one of the preceding claims,
**characterized in that**
the icing detection is performed only if the actual velocity of the vehicle (1) is higher than a threshold velocity.

6. Method according to Claim 5,
**characterized in that**
the threshold velocity is at least 10 km/h, preferably 20 km/h.

7. Method according to any one of the preceding claims,
**characterized in that**
the icing detection is performed only if the ambient temperature is below a threshold temperature.

8. Method according to Claim 7,
**characterized in that**
the threshold temperature is +7°C or lower.

9. Method according to any one of the preceding claims,
**characterized in that**
the icing detection is performed [only] if the windscreen wiper is inactive.

10. Method according to any one of the preceding claims,
**characterized in that**
upon detection of icing, the driver assistance system is deactivated and/or a warning message is given to the driver.

11. Method according to Claim 10,
**characterized in that**
following detection of icing, acquisition of measurement signals continues; if a smaller number of measurement signals yielding corresponding object data are detected within a second time interval than a second threshold value, the deactivation of the driver assistance system (2) is cancelled and/or a new message is output to the driver.

12. Method according to Claim 11,
**characterized in that**
the second time interval is at least 60 s, and preferably 120 s.

## Revendications

1. Procédé de détection de givre d'un capteur radar servant à la détection d'objets d'un système d'assistance du conducteur (2) prévu dans un véhicule automobile (1), dans lequel un dispositif de commande (3) commandant le fonctionnement du capteur radar (4) exploite les signaux de mesure émis par le capteur radar (4) qui indiquent la présence d'un objet et détermine à l'aide d'un signal de mesure, des données d'objet comprenant une distance de l'objet et/ou la vitesse relative de l'objet par rapport au capteur radar et/ou la déviation latérale de l'objet par rapport à un axe idéal situé dans l'éventail de signaux du capteur radar (4),
**caractérisé en ce que**
les signaux de mesure, pour lesquels des données d'objets sont déterminées, dont la distance (A) est ≤ 3 m, en particulier ≤ 2 m par rapport au capteur radar (4), sont détectés à l'intérieur d'un intervalle de temps prédéfini (t₁), le nombre de signaux de mesure comptés étant comparé à une valeur seuil (S) et l'atteinte ou le dépassement de la valeur seuil est pris en compte dans le cadre de la détection de givre.

2. Procédé selon la revendication 1,
**caractérisé en ce que**
seuls sont détectés et comptabilisés les signaux de mesure, pour lesquels des données d'objets sont déterminées en plus, dont la vitesse relative se situe dans la plage comprise entre -3 m/s et +3 m/s, en particulier entre -2 m/s et +2 m/s et/ou leur déviation latérale se trouve dans la plage comprise entre -1,5 m et +1,5 m, en particulier entre -1 m et +1 m par rapport à un axe de mesure idéal du capteur radar (4), du givre étant détecté lorsque la valeur seuil est atteinte ou dépassée.

3. Procédé selon la revendication 1 ou 2,
**caractérisé en ce que**
l'intervalle de temps est ≤ 20 s, en particulier ≤ 10 s, de préférence de 4 s.

4. Procédé selon l'une quelconque des revendications précédentes,
**caractérisé en ce que**
la valeur seuil du nombre de signaux de mesure comptés est comprise entre 2 et 100.

5. Procédé selon l'une quelconque des revendications précédentes,
**caractérisé en ce que**
la détection de givre n'est réalisée que lorsque la vitesse réelle du véhicule (1) est supérieure à une vitesse seuil.

6. Procédé selon la revendication 5,
**caractérisé en ce que**
la vitesse seuil est d'au moins 10 km/h, de préférence de 20 km/h.

7. Procédé selon l'une quelconque des revendications précédentes,
**caractérisé en ce que**
la détection de givre n'est réalisée que lorsque la température ambiante est inférieure à une température seuil.

8. Procédé selon la revendication 7,
**caractérisé en ce que**
la température seuil est de +7°C ou moins.

9. Procédé selon l'une quelconque des revendications précédentes,
**caractérisé en ce que**
la détection de givre est réalisée lorsqu'un dispositif d'essuie-glace est inactif.

10. Procédé selon l'une quelconque des revendications précédentes,
**caractérisé en ce que**
en cas de détection de givre, le système d'assistance du conducteur est désactivé et/ou une information d'alerte est donnée au conducteur.

11. Procédé selon la revendication 10,
**caractérisé en ce que**
après détection de givre, des signaux de mesure continuent d'être relevés en continu, lorsqu'à l'intérieur d'un deuxième intervalle de temps un nombre de signaux de mesure est déterminé, pour lesquels des données d'objets correspondantes sont déterminées qui sont inférieures à une deuxième valeur seuil, la désactivation du système d'assistance du conducteur (2) est annulée et/ou une nouvelle information est émise au conducteur.

12. Procédé selon la revendication 11,
**caractérisé en ce que**
le deuxième intervalle de temps est d'au moins 60 s, de préférence de 120 s.
